# FASCICULE DE BREVET EUROPEEN

(11) **EP 1 235 836 B1**
(45) Date de publication et mention de la délivrance du brevet: **28.07.2004**
(21) Numéro de dépôt: 00985384.7
(22) Date de dépôt: 01.12.2000
(51) Int. Cl.: C07F 15/00, C07F 7/08, C07F 7/14, C08G 77/38, B01J 31/22

(54) **CATALYSEURS POUR REACTIONS D'HYDROSILYLATION**
METALLKOMPLEXE ALS HYRDOSILYLIERUNGSKATALYSATOREN
CATALYSTS FOR HYDROSILYLATION REACTIONS

(30) Priorité: 07.12.1999 FR 9915432
(43) Date de publication de la demande: 04.09.2002
(73) Titulaire: Rhodia Chimie, 92512 Boulogne-Billancourt (FR)
(72) Inventeur: MARKO, Istvan, B-1390 Grez-Doiceau (BE); STERIN, Sébastien, 69450 St-Cyr au Mont D'Or (FR)
(74) Mandataire: Trolliet, Maurice
(86) Numéro de dépôt international: PCT/FR2000/003362
(87) Numéro de publication internationale: WO 2001/042258

(56) Documents cités:
- FR-A- 2 474 890
- CHEMICAL ABSTRACTS, vol. 129, no. 17, 26 octobre 1998 (1998-10-26) Columbus, Ohio, US; abstract no. 216758, ENDERS, DIETER ET AL: "Diastereoselective synthesis of chiral (triazolinylidene)rhodium complexe containing an axis of chirality" XP002143369 & EUR. J. INORG. CHEM. (1998), (7), 913-919, 1998,

## Description

L'invention concerne un catalyseur approprié à la catalyse de réactions d'hydrosilylation.

L'addition d'un composé organosilylé présentant un motif Si-H à une oléfine ou à un dérivé acétylénique par formation d'une liaison carbone-silicium (réaction d'hydrosilylation) est conventionnellement réalisée en présence d'un catalyseur métallique. La réaction d'hydrosilylation est schématisée de la façon suivante dans le cas des oléfines :

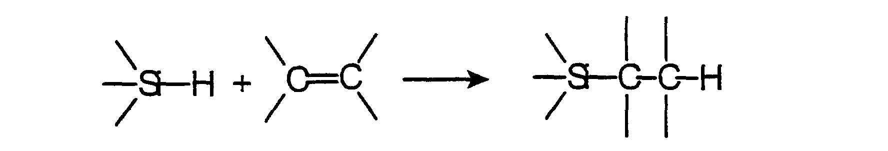

Comme exemple de catalyseur, des catalyseurs au platine ont été préconisés par de nombreux auteurs. Ainsi, US 2 823 218 décrit un acide chloroplatinique comme catalyseur. US 2 970 150 propose l'utilisation de platine métallique sur un support finement divisé. Les méthodes d'hydrosilylation décrites dans ces brevets sont cependant peu attrayantes d'un point de vue économique dans la mesure où elle nécessite l'utilisation de grandes quantités de catalyseur au platine.

Ainsi, à ce jour, la plupart des réactions industrielles d'hydrosilylation sont catalysées par la solution de Karstedt qui est constituée par des complexes de platine au degré d'oxydation 0. La formule générale du complexe de Karstedt est Pt₂(tétraméthyfdivinylsiloxane)₃ : 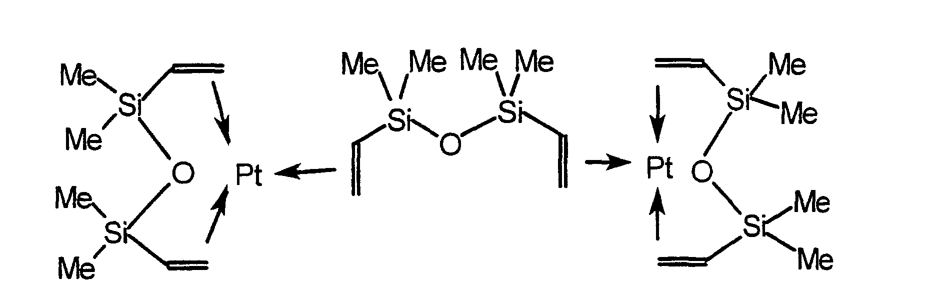 où Me représente méthyle.

L'un des inconvénients de ce catalyseur réside dans une possible instabilité du catalyseur en cours de réaction : on a pu observer la précipitation de platine métallique et la formation de colloïdes insolubles dans le milieu réactionnel : cette instabilité du catalyseur dans le milieu réactionnel a pour effet de réduire l'activité catalytique. De plus, il en résulte des solutions troubles et fortement colorées, peu appréciées de l'utilisateur dans la mesure où elles conduisent à la formation de produits d'hydrosilylation fortement colorés.

Un autre inconvénient majeur du catalyseur de Karstedt est la formation concomitante de sous-produits de la réaction d'hydrosilylation : au côté des produits d'hydrosilylation sont isolés les produits résultant de réactions d'isomérisation de la double liaison oléfinique et/ou de réactions d'hydrogénation.

L'un des objectifs de la présente invention est donc de fournir un complexe catalyseur. stable, permettant de limiter les réactions secondaires.

Du fait de son excellente stabilité, le complexe de l'invention permet par ailleurs d'opérer à des températures réactionnelles plus élevées.

Les autres avantages de l'invention apparaitront à l'homme du métier à la lecture des modes de réalisation préférés de l'invention.

L'invention concerne plus précisément un complexe métallique de formule I: 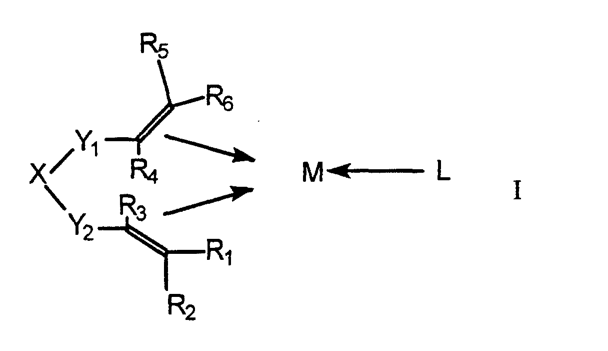 dans laquelle :
M représente un métal à l'état d'oxydation 0 choisi parmi les métaux du groupe 8 du tableau périodique tel que publié dans Handbook of Chemistry and Physics, 65^{ème} édition, 1984-1985 ;
X repésente O, NRₐ ou CR_{f}R_{g} ;
Y₁ et Y₂ représentent indépendamment l'un de l'autre CR_{b}R_{c} ou SiR_{d}Rₑ ;
R₁, R₂, R₅ et R₆, identiques ou différents, sont choisis parmi un atome d'hydrogène, un groupe alkyle et un groupe aryle éventuellement substitué par alkyle ;
R₃, R₄, Rₐ, R_{b}, R_{c} sont indépendamment choisis parmi un atome d'hydrogène ; un groupe alkyle ; acyle ; aryle éventuellement substitué par alkyle ; cycloalkyle éventuellement substitué par alkyle ; et arylalkyle dans lequel la partie aryle est éventuellement substitué par alkyle ;
R_{d} et Rₑ sont indépendamment choisis parmi alcényle ; alcynyle ; alkyle ; alcoxy ; acyle ; aryle éventuellement substitué par alkyle ; cycloalkyle éventuellement substitué par alkyle ; et arylalkyle dans lequel la partie aryle est éventuellement substituée par alkyle ; ou bien
lorsque Y₁ et Y₂ représentent indépendamment SiR_{d}Rₑ, deux groupes R_{d} liés à deux atomes de silicium distincts forment ensemble une chaîne de formule : 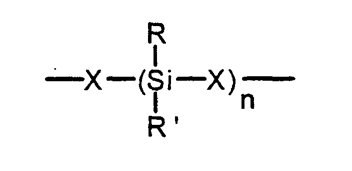 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3, un seul atome de silicium de ladite chaîne peut être substitué par un ou deux groupes alcényle ou alcynyle ;
ou bien lorsque Y₁ et Y₂ représentent indépendamment SiR_{d}Rₑ, deux groupes R_{d} liés à des atomes de silicium distincts forment ensemble une chaîne hydrocarbonée saturée, les deux groupes R_{b} ensemble avec lesdits atomes de silicium et X formant un cycle de 6 à 10 chaînons ; ou bien
lorsque Y₁ et Y₂ représentent indépendamment CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X forment un cycle de 6 à 10 chaînons ;
R_{f} et R_{g} représentent indépendamment l'un de l'autre un atome d'hydrogène ; un groupe alkyle ; acyle ; aryle éventuellement substitué par alkyle ; cycloalkyle éventuellement substitué par alkyle ; arylalkyle dans lequel la partie aryle est éventuellement substituée par alkyle ; un atome d'halogène ; un groupe alcényle ; un groupe alcynyle ; ou un groupe SiG₁G₂G₃ où G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy ;
L représente un carbène de formule II.1 ou II.2 : 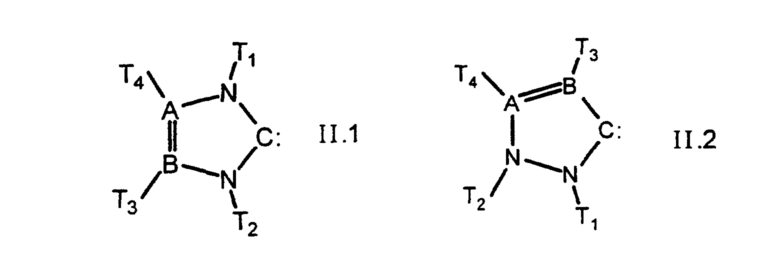 dans lesquelles:
- A et B représentent indépendamment C ou N, étant entendu que lorsque A représente N, alors T₄ ne représente rien et lorsque B représente N, alors T₃ ne représente rien ;
- T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle ; ou arylalkyle dans lequel la partie aryle est éventuellement substituée par alkyle ou alkoxy ;
- T₁ et T₂ représentent indépendamment un groupe alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- les substituants T₁, T₂, T₃ et T₄, peuvent former deux à deux, lorsqu'ils sont situés sur deux sommets adjacents dans les formule II.1 et II.2, une chaîne hydrocarbonée saturée ou insaturée.

Selon l'invention, le degré d'oxydation 0 du métal M est une caractéristique essentielle de l'invention.

De préférence, les métaux du groupe 8 que représente M sont le palladium, le platine ou le nickel. Selon un mode de réalisation plus préférentiel de l'invention, M représente le platine à l'état d'oxydation 0.

Par alkyle, on entend selon l'invention une chaîne hydrocarbonée saturée, linéaire ou ramifiée, de préférence de 1 à 10 atomes de carbone, par exemple de 1 à 8 atomes de carbone, mieux encore de 1 à 7 atomes de carbone.

Des exemples de groupes alkyle sont notamment méthyle, éthyle, isopropyle, n-propyle, tert-butyle, isobutyle, n-butyle, n-pentyle, isoamyle et 1,1-diméthylpropyle.

Selon l'invention, la partie alkyle du radical alcoxy est telle que définie ci-dessus.

Le radical alkyle perfluoré ou éventuellement substitué par un groupe perfluoroalkyle a de préférence pour formule :

―(CH₂)ₚ―C_{q}F_{2q+1}

dans laquelle p représente 0, 1, 2, 3 ou 4 ; q est un entier de 1 à 10 ; et C_{q}F_{2q+1} est linéaire ou ramifié. Des exemples préférés de ce radical sont : ―(CH₂)₂―(CF₂)₅―CF₃ et ―(CF₂)₇―CF₃.

L'expression aryle désigne un groupe hydrocarboné aromatique de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés les uns aux autres, c'est-à-dire présentant, deux à deux, au moins deux carbones en commun. A titre d'exemple, on peut mentionner les radicaux phényle, naphtyle, anthryle et phénanthryle.

L'expression arylalkyle désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend selon l'invention, un groupe Rₒ-CO- où Rₒ représente alkyle tel que défini ci-dessus ; ou bien un groupe Ar-CO- où Ar représente un groupe aryle tel que défini ci-dessus, ou bien arylalkyle dans lequel aryle et alkyle sont tels que définis ci-dessus et dans lequel la partie aryle est éventuellement substituée par alkyle.

Par cycloalkyle, on entend un radical hydrocarboné saturé mono- ou polycyclique, de préférence mono- ou bicyclique, présentant préférablement de 3 à 10 atomes de carbone, mieux encore de 3 à 8. Par radical hydrocarboné saturé polycyclique, on entend un radical présentant deux ou plusieurs noyaux cycliques rattachés les uns aux autres par des liaisons σ ou/et condensés deux à deux.

Des exemples de groupes cycloalkyle polycycliques sont adamantane et norbomane.

Des exemples de groupes cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, présentant au moins une double liaison oléfinique, et plus préférablement une seule double liaison. De préférence, le groupe alcényle présente de 2 à 8 atomes de carbone, mieux encore de 2 à 6.

Des exemples préférés de groupes alcényle sont les groupes vinyle et allyle.

Par alcynyle, on entend selon l'invention, une chaîne hydrocarbonée insaturée, linéaire ou ramifiée, présentant au moins une triple liaison acétylénique, et plus préférablement une seule triple liaison. De préference, le groupe alcynyle présente de 2 à 8 atomes de carbone, mieux encore de 2 à 6 atomes de carbone. A titre d'exemple, on peut citer le groupe acétylényle, ainsi que le groupe propargyle.

Selon un mode de réalisation préféré de l'invention, Y₁ et Y₂ représentent soit tous les deux CR_{b}R_{c}, soit tous les deux SiR_{d}Rₑ, de telle sorte que les composés préférés de l'invention ont, soit pour formule I.1, soit pour formule 1.2 : 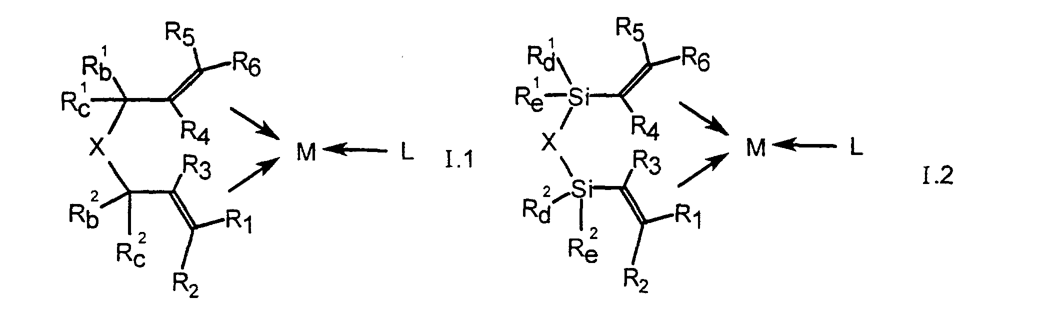 où R_{b}¹ et R_{c}¹ sont les substituants R_{b} et R_{c} de Y₁ dans la formule I.1 ;
R_{b}² et R_{C}² sont les substituants R_{b} et R_{c} de Y₂ dans la formule I.2 ;
R_{d}¹ et Rₑ¹ sont les substituants R_{d} et Rₑ de Y₁ dans la formule I.1 ;
R_{d}² et Rₑ² sont les substituants R_{d} et Rₑ de Y₂ dans la formule 1.2.

Ainsi, R_{b}¹ peut être identique ou différent de R_{b}² ; R_{c}¹ peut être identique ou différent de R_{c}² ; R_{d}¹ peut être identique ou différent de R_{d}² ; et Rₑ¹ peut être identique ou différent de Rₑ².

De manière préférée, R_{b}¹ = R_{b}² ; R_{c}¹ = R_{c}² ; R_{d}¹ = R_{d}² ; et Rₑ¹ = Rₑ².

Parmi ces derniers composés, ceux pour lesquels R₃ = R₄ ; R₅ = R₂ ; et R₁ = R₆, sont encore préférés.

Selon une autre variante préférée de l'invention, R_{d}¹ et R_{d}² forment ensemble :
(a) soit une chaîne 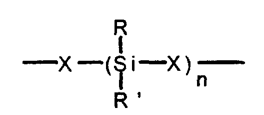 dans laquelle n est un entier de 1 à 3 ; X est tel que défini ci-dessus ; et R et R', identiques ou différents, prennent l'une quelconque des significations données ci-dessus pour Rₑ, étant entendu que, lorsque n est 2 ou 3, un seul atome de silicium de ladite chaîne peut être substitué par un ou deux groupes alcényle ou alcynyle ;
(b) soit une chaîne hydrocarbonée saturée, de telle sorte que les deux substituants R_{d}, ensemble avec les deux atomes de silicium qui les portent et X, forment un cycle de 6 à 10 chaînons, de préférence de 6 à 8 chaînons.

Lorsque R_{d}¹ et R_{d}² forment la chaîne (a), on préfère que n vale 1 ou 2 (mieux encore n vaut 1) et que R = Rₑ, les deux groupes Rₑ portés par les deux atomes de silicium étant identiques. En ce cas, Rₑ représente préférablement alkyle, par exemple méthyle. Mieux encore, dans ces composés, R' représente -CR₃=CR₁R₂ et R₁ = R₆; R₅ = R₂ ; et R₃ = R₄.

Lorsque R_{d}¹ et R_{d}² forment la chaîne (b), on préfère que les deux groupes R_{d}, ensemble avec les deux atomes de silicium et le groupe X, forment un cycle à 8 chaînons. En ce cas, on préfère que Rₑ¹ soit identique à Rₑ². Ces composés ont pour formule générale : 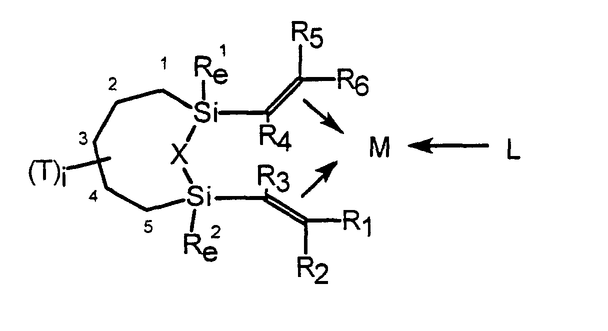 où T représente alkyle , i est un nombre entier compris entre 0 et 5, T étant situé sur un ou plusieurs des sommets 1, 2, 3, 4 et 5 de la formule ci-dessus.

De la même façon, lorsque Y₁ et Y₂ représentent CR_{b}R_{C}, les deux groupes R_{b} liés à des atomes de carbone distincts peuvent former ensemble une chaîne hydrocarbonée saturée (c), de telle sorte que les deux groupes R_{b} ensemble avec les carbones qui les portent et X forment un cycle de 6 à 10 chaînons. De préférence, le cycle formé est un cycle à 8 chaînons, auquel cas le complexe métallique répond à la formule : 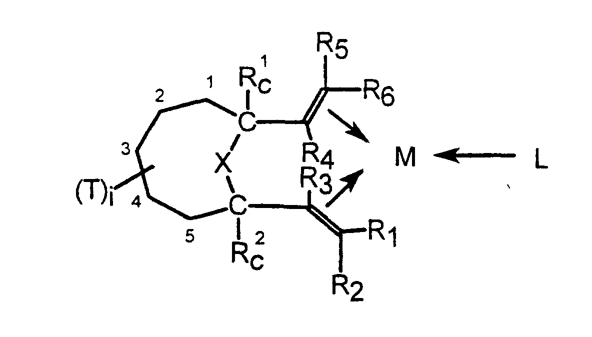 où T représente alkyle ; i est un nombre entier compris entre 0 et 5, T étant situé sur un ou plusieurs des sommets 1, 2, 3, 4 et 5 de la formule ci-dessus.

Dans le cadre de l'invention, deux groupes R_{d} liés à deux atomes de silicium distincts peuvent former une chaîne de formule :

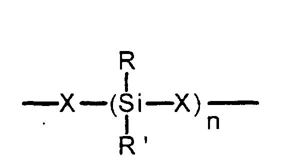

Lorsque c'est le cas, on préfère que X représente O dans les composés de l'invention. Ces composés préférés ont pour formule générale :

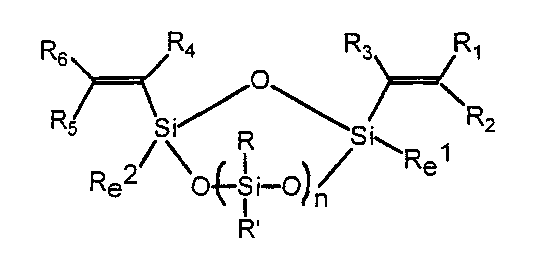

Parmi ces composés, on préfère que Rₑ¹ = Rₑ². Avantageusement Rₑ¹ = Rₑ² représente alkyle (par exemple méthyle).

De façon préférée, n vaut 1 ou 2 et R = Rₑ¹, étant entendu que lorsque n vaut 2, un seul atome de silicium de la chaîne O-(SiRR'-O)ₙ- peut être substitué par un ou deux groupes alcényle ou alcynyle. Mieux encore, R' = -CR₃=CR₁R₂ et R₁ = R₆ ; R₂ = R₅ et R₃ = R₄.

L'expression "ne représente rien" signifie que les substituants -T₃, respectivement -T₄, sont inexistants. En effet, dans les formules II.1 et II.2, l'atome d' azote est trivalent, de telle sorte que lorsque A ou B représente N, l'atome d'azote ne peut présenter de substituant supplémentaire.

Selon un mode de réalisation particulier de l'invention, les carbènes de formules II.1 et II.2 présentent au moins deux noyaux condensés, c'est-à-dire que deux substituants au moins parmi T₁, T₂, T₃ et T₄, situés sur deux sommets adjacents, forment ensemble une chaîne hydrocarbonée saturée ou insaturée, présentant de préférence de 3 à 6 atomes de carbone. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Lorsque les carbènes II.1 et II.2 présentent deux noyaux condensés, ils répondent donc à l'une des formules suivantes, dans lesquelles (alk) représente une chaîne hydrocarbonée saturée ou insaturée :

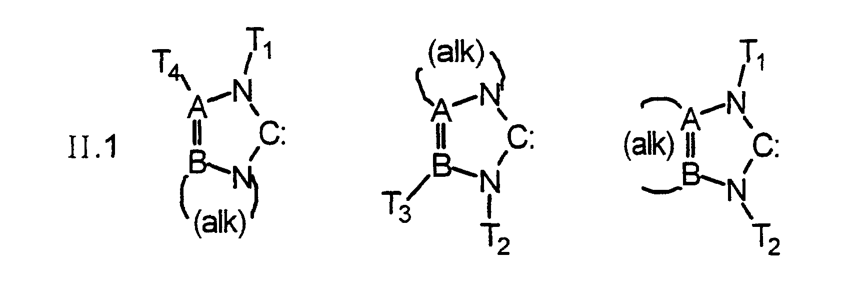

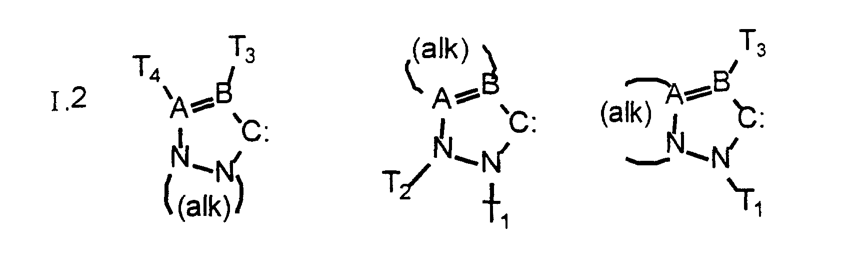

II doit être entendu cependant que les carbènes II.1 et II.2 peuvent présenter plus de deux noyaux condensés.

Lorsque R_{f} et/ou R_{g} représente SiG₁G₂G₃, on préfère que R_{f} et/ou R_{g} soit trialkylsilyle, par exemple SiG₁G₂G₃ où G₁ = G₂ = G₃ = alkyle.

Des sous-groupes des complexes métalliques de l'invention sont constitués des complexes pour lesquels :
- X = O ; Y₁ et Y₂ représentent indépendamment SiR_{d}Rₑ ; ou
- X = NRₐ ; Y₁ et Y₂ représentent indépendamment CR_{b}R_{c} ; ou
- X = NRₐ ; Y₁ et Y₂ représentent indépendamment SiR_{d}Rₑ ; ou
- X = CR_{f}R_{g} ; Y₁ et Y₂ représentent indépendamment CR_{b}R_{c} ; ou
- X = CR_{f}R_{g} ; Y₁ et Y₂ représentent indépendamment SiR_{d}Rₑ.

Parmi ces complexes métalliques de formule I, on préfère ceux pour lesquels :
- lorsque X représente O, Y₁ et Y₂ représentent indépendamment SiR_{d}Rₑ ; ou
- lorsque X représente NRₐ, Y₁ et Y₂ représentent indépendamment CR_{b}R_{c} ; ou
- lorsque X représente CR_{f}R_{g}, Y₁ et Y₂ représentent indépendamment CR_{b}R_{c}.

Très préférablement, X représente O et Y₁ et Y₂ représentent indépendamment SiR_{d}Rₑ dans le complexe métallique de formule I. Dans le cadre de l'invention, l'expression "représentent indépendamment" signifie que les substituants désignés sont soit identiques soit différents.

De préférence encore, R₁, R₂, R₅ et R₆ sont des atomes d'hydrogène.

Des significations préférées de R₃ et R₄ sont notamment un atome d'hydrogène ; un groupe alkyle ; aryle éventuellement substitué par alkyle ; et cycloalkyle éventuellement substitué par alkyle. Parmi ces significations préférées, il est particulièrement avantageux que R₃ et R₄, identiques, représentent un atome d'hydrogène ; (C₃-C₈)cycloalkyle ou (C₁-C₈)alkyle.

De préférence encore, le ligand dioléfinique du complexe de formule I est symétrique, c'est-à-dire que R₅ = R₂ ; R₆ = R₁ ; R₃ = R₄ et les deux groupes Y₁, Y₂ sont soit strictement identiques entre eux, soit Y₁ = CR_{b}¹R_{c} et Y₂ = CR_{b}²R_{c} où R_{b}¹ et R_{b}² forment ensemble une chaîne symétrique, soit encore Y₁ = SiR_{d}¹Rₑ et Y₂ = SiR_{d}²Rₑ où R_{d}¹ et R_{d}² forment ensemble une chaîne symétrique.

Un groupe préféré de complexes selon l'invention est constitué des complexes de formule I dans lesquels L représente un carbène de formule II.1.

De manière préférée, A et B dans les formules II.1 et II.2 représentent tous deux un atome de carbone.

Des significations préférées de T₁ et T₂ sont alkyle ; cycloalkyle ; arylalkyle ; et aryle éventuellement substitué par alkyle.

Des significations préférées de T₃ et T₄ sont hydrogène ; alkyle ; cycloalkyle ; arylalkyle ; et aryle éventuellement substitué par alkyle.

De façon préférée, lorsque T₁, T₂, T₃ ou T₄ représente alkyle, alors alkyle est méthyle, isopropyle ou tert-butyle.

De même, lorsque T₁, T₂, T₃ ou T₄ représente aryle, alors aryle est phényle.

Lorsque T₁, T₂, T₃ ou T₄ représente aryle éventuellement substitué par alkyle, alors T₁, T₂, T₃ ou T₄ est tolyle ou xylyle.

Lorsque T₁, T₂, T₃ ou T₄ représente arylalkyle, alors arylalkyle est de préférence benzyle ou triphénylméthyle.

Lorsque T₁, T₂, T₃ ou T₄ représente cycloalkyle, alors cycloalkyle est de préférence cyclopentyle, cyclohexyle ou adamantyle.

Un groupe préféré de complexes de formule I est constitué des complexes pour lesquels dans le carbène de formules II.1 ou II.2, T₃ et T₄ représentent un atome d'hydrogène.

De même, les complexes de formule I dans lesquels T₁ et T₂ sont choisis parmi (C₁-C₈)alkyle et (C₃-C₈)cycloalkyle forment un sous-groupe préféré. Mieux encore, T₁ et T₂ sont identiques et représentent (C₃-C₈)cycloalkyle.

De façon avantageuse, T₁ et T₂, identiques ou différents, représentent (C₁-C₈)alkyle ou (C₃-C₈)cycloalkyle ; ou bien R₃ et R₄, identiques ou différents, représentent (C₁-C₈)alkyle ou (C₃-C₈)cycloalkyle ; ou bien encore T₁, T₂, R₃ et R₄ identiques ou différents, représentent (C₁-C₈)alkyle ou (C₃-C₈)cycloalkyle.

Un groupe particulièrement préféré des complexes métalliques de formule I est constitué des complexes de formule : 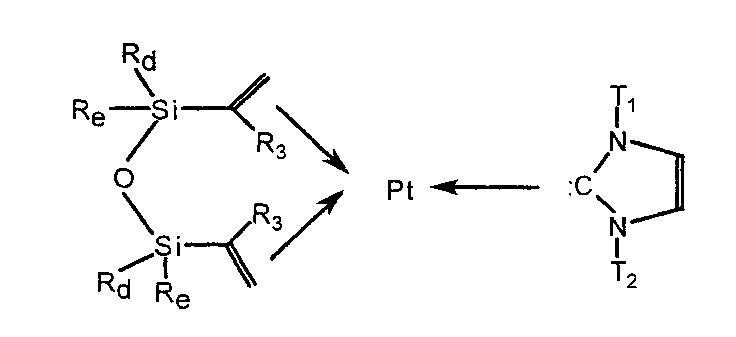 dans laquelle :
R₃ représente un atome d'hydrogène ; un groupe (C₁-C₈)alkyle ; ou un groupe (C₃-C₈)cycloalkyle éventuellement substitué par (C₁-C₄)alkyle ;
T₁ et T₂ sont identiques et représentent (C₁-C₈)alkyle ou (C₃-C₈)cycloalkyle ;
R_{d} et Rₑ sont tels que définis ci-dessus.

D'autres sous-groupes préférés de l'invention sont définis comme suit:
- Complexes métalliques de formule I dans lesquels Y₁ et Y₂, identiques, représentent SiR_{d}Rₑ ; R₁ = R₂ = R₃ = R₄ = R₅ = R₆ = H ; X = O ; R_{d} et Rₑ sont indépendamment choisis parmi alkyle ; aryle éventuellement substitué par alkyle ; alcényle ; et alcynyle.
- Complexes métalliques de formule I dans lesquels Y₁ et Y₂, identiques, représentent SiR_{d}Rₑ ; X = O ; R₁ = R₆ ; R₂ = R₅ ; R₃ = R₄ ; R₁ et R₂ représentent indépendamment alkyle ; R₃ représente alkyle ou aryle éventuellement substitué par alkyle ; R_{d} et Rₑ représentent indépendamment alkyle ; alcényle ; alcynyle ; ou aryle éventuellement substitué par alkyle.
- Complexes métalliques de formule I dans lesquels Y₁ et Y₂, identiques, représentent SiR_{d}Rₑ ; X = O ; R₁ = R₂ = R₃ = R₄ = R₅ = R₆ = H ; et R_{d} = Rₑ = méthyle ou bien R_{d} = méthyle et Rₑ = phényle.
- Complexes métalliques de formule I dans lesquels Y₁ et Y₂, identiques, représentent SiR_{d}Rₑ ; X = O ; R₁ = R₃ = R₄ = R₆ = H ; R₂ = R₅ = alkyle.
- Complexes métalliques de formule I dans lesquels Y₁ et Y₂, identiques, représentent SiR_{d}Rₑ ; X = CR_{f}R_{g} ; R_{f} = R_{g} = un atome d'hydrogène ; R_{d} et Rₑ, identiques ou différents, sont choisis parmi alkyle ; et aryle éventuellement substitué par alkyle ; R₁ = R₆ ; R₂ = R₅ ; R₃ = R₄ ; R₁ et R₂ sont choisis parmi un atome d'hydrogène et un groupe alkyle ; R₃ représente un atome d'hydrogène, alkyle ou aryle éventuellement substitué par alkyle.
- Complexes métalliques de formule I dans lesquels Y₁ et Y₂, identiques, représentent SiR_{d}Rₑ ; X = CR_{f}R_{g} où R_{f} et R_{g} représentent un atome d'halogène de préférence un atome de chlore ou un atome de brome ; R_{d} = Rₑ = alkyle, de préférence méthyle ; R₁ = R₂ = R₃ = R₄ = R₅ = R₆ = H.
- Complexes métalliques de formule I dans lesquels Y₁ et Y₂, identiques, représentent SiR_{d}Rₑ ; X = CR_{f}R_{g} où R_{f} et R_{g} représentent SiG₁G₂G₃ tel que trialkylsilyle (par exemple Si(CH₃)₃) ; R_{d} = Rₑ = alkyle de préférence méthyle ; R₁ = R₂ = R₃ = R₄ = R₅ = R₆ = H.
- Complexes métalliques de formule I dans lesquels X représente -NRₐ ; Y₁ et Y₂ identiques représentent SiR_{d}Rₑ ; R₁ = R₆ ; R₂ = R₅ ; R₃ = R₄ .
- Complexes métalliques de formule I dans laquelle X représente NRₐ ; Y₁ = Y₂ = SiR_{d}Rₑ ; les deux groupes R_{d} forment ensemble la chaîne
- NRₐ-(SiRₑR_{d}^{o}-NRₐ)ₙ-
dans laquelle R_{d}^{o} représente -CR₃=CR₁R₂ ; n représente de 1 à 3 ; R₁ = R₆; R₂ = R₅ ; et R₃ = R₄.

Les complexes de l'invention sont préparés de façon conventionnelle, par exemple à partir de complexes connus de l'état de la technique par échange de ligand, c'est-à-dire par addition du carbène approprié de formule II.1 ou II.2 à un complexe métallique du métal M, en solution, désigné complexe précurseur.

Des complexes précurseurs appropriés sont le complexe de Karstedt de formule :
- Pt₂[ViMe₂Si-O-SiMe₂Vi]₃
dans laquelle Vi représente le radical vinyle ; et plus généralement

M₂[R₅R₆C=CR₄-Y₁-X-Y₂-CR₃=CR₁R₂]₃

où M, R₅, R₆, R₄, R₃, R₁, R₂, Y₁, X et Y₂ sont tels que définis ci-dessus, tels que par exemple
M₂[CR₅R₆=CR₄-SiR_{d}Rₑ-O-SiR_{d}Rₑ-CR₃=CR₁R₂]₃ étant entendu que M, R₁, R₂, R₃, R₄, R₅, R₆, R_{d} et Rₑ sont tels que définis ci-dessus ;
- Pt(COD)₂ dans lequel COD représente cyclooctadiène et plus généralement M(COD)₂ où M est un métal du groupe 8 ; ou bien
- des complexes métalliques d'oléfine et de bisphosphine.

Les complexes de formule I sont généralement préparés à partir de complexes précurseurs présentant, comme ligand, au moins un composé dioléfinique de formule III : 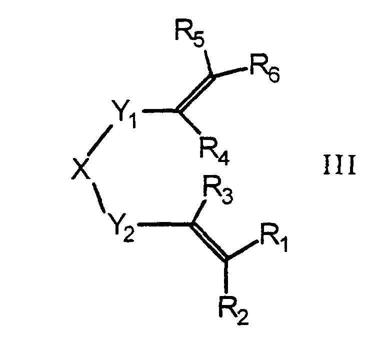 dans laquellle R₁, R₂, R₃, R₄, R₅, R₆, X, Y₁ et Y₂ sont tels que définis ci-dessus pour la formule I.

Ces ligands sont soit disponibles dans le commerce, soit facilement préparés par l'homme du métier à partir de composés commerciaux.

Lorsque X représente NRₐ et Y₁ et Y₂, indépendamment l'un de l'autre, représentent CR_{b}R_{c}, les composés de formule III sont des amines qu'il est facile de préparer par mise en oeuvre des procédés classiques de la chimie organique. Ainsi, lorsque Rₐ est distinct d'un atome d'hydrogène, ces amines peuvent être facilement préparées à partir de l'amine primaire correspondante de formule RₐNH₂ par action de chlorures appropnés préférablement en présence d'une base organique ou minérale.

Lorsque la dioléfine III est symétrique (c'est-à-dire que R₄ = R₃ ; R₅ = R₂ ; R₁ = R₆ ; et Y₁ = Y₂), on fait réagir RₐNH₂ avec deux équivalents d'un chlorure de formule :

Cl-CR_{b}R_{c}-CR₃=CR₁R₂ (IV)

en présence d'une base.

Lorsque la dioléfine III est disymétrique, il est préférable de protéger le groupe amino de RₐNH₂ par un groupe protecteur P conventionnel approprié avant de faire réagir le composé résultant de formule RₐNHP sur le chlorure de formule V :

Cl-CR_{b}²R_{c}²-CR₃=CR₁R₂ (V)

en présence d'une base appropriée.

Puis, après déprotection, on fait réagir l'amine résultante sur un chlorure de formule :

Cl-CR_{b}¹R_{c}¹ -CR₄=CR₅R₆ (VI)

de façon à obtenir l'amine attendu.

Dans les formules IV, V et VI ci-dessus, les substituants R₁, R₂, R₃, R₄, R₅ et R₆ sont tels que définis pour la formule I ; R_{b}¹ et R_{b}² sont tels que définis pour R_{b} ; et R_{C}¹ et R_{c}² sont tels que définis pour R_{c}.

Les groupes protecteurs P des fonctions amines ainsi que les méthodes de déprotection correspondantes sont décrits dans Protective Groups in Organic Synthesis, Greene T.W. et Wuts P.G.M., ed. John Wiley et Sons, 1991, et dans Protecting Groups, Kocienski P.J., 1994, Georg Thieme Verlag.

Lorsque Rₐ représente un atome d'hydrogène, il est souhaitable de sélectionner, à titre de composé de départ, l'amine de formule VII suivante, préalablement protégée au niveau de la fonction amino par un groupe protecteur P tel que défini ci-dessus :

NH₂-CR_{b}² R_{c}²-CR₃=CR₁R₂ (VII).

On fait réagir l'amine VII protégée avec un chlorure de formule VI telle que définie ci-dessus, de préférence en présence d'une base, puis par déprotection de la fonction amino, on isole le composé attendu de formule III.

Des bases appropriées sont par exemple une base organique choisie parmi la triéthylamine, la diisopropylamine, la pyridine et la N,N-diméthylaniline ou une base minérale telle que NaOH, KOH, NaHCO₃, Na₂CO₃, KHCO₃ et K₂CO₃.

Lorsque X représente O et Y représente CR_{b}R_{c}, les composés de formule III sont des éthers. Ces éthers sont disponibles dans le commerce ou préparés de façon connue en soi à partir de composés disponibles dans le commerce.

Les composés de formule III dans lesquels X représente CR_{f}R_{g} et Y représente CR_{b}R_{c} sont des dioléfines facilement accessibles à l'homme du métier par synthèse ou disponibles dans le commerce.

Les composés de formule III dans lesquels X représente NRₐ où Rₐ représente H ou alkyle ; R₁ = R₆ ; R₂ = R₅ ; R₃ = R₄ ; et Y₁ = Y₂ = SiR_{d}Rₑ peuvent être préparés par action d'une amine Rₐ-NH₂ avec deux équivalents d'un chlorure de silyle de formule :

CISiR_{d}Rₑ-CR₃=CR₁R₂

dans laquelle Rₑ, R_{d}, R₁, R₂ et R₃ sont tels que définis ci-dessus.

Les composés de formule III dans lesquels X représente NRₐ, Rₐ étant tel que défini ci-dessus à la formule I ; Y₁ = Y₂ = SiR_{d}Rₑ où Rₑ est tel que défini ci-dessus à la formule I ; les deux groupes R_{d} forment ensemble la chaîne :

- NRₐ-(SiRₑR_{d}^{o}-NRₐ)ₙ-

dans laquelle Rₐ et Rₑ sont tels que définis ci-dessus ; n représente un entier de 1 à 3 ; R_{d}^{o} représente -CR₃=CR₁R₂ ; R₁ = R₆ ; R₂ = R₅ et R₃ = R₄, peuvent être préparés par réaction de l'amine Rₐ-NH₂ avec le chlorure de silyle de formule :

Cl₂SiRₑ-CR₃=CR₁R₂

dans laquelle Rₑ, R₁, R₂ et R₃ sont tels que définis ci-dessus.

Les composés de formule III dans lesquels X représente O, et Y₁ et Y₂ représentent SiR_{d}Rₑ sont des siloxanes linéaires, ramifiés ou cycliques qui sont commercialisés ou dont la préparation est possible à partir de composés commerciaux, par mise en oeuvre des procédés classiques de l'état de la technique. Des exemples de siloxanes de formule III préférés sont ViMe₂SiOSiMe₂Vi et (MeViSiO)₃, la seconde formule représentant un cyclosiloxane dans lesquels Vi représente vinyle.

Dans le cas des composés symétriques de formule III, c'est-à-dire ceux pour lesquels R₁ = R₆ ; R₂ = R₅ ; R₃ = R₄ et Y₁ = Y₂, l'une des variantes de synthèse suivante pourra être mise en oeuvre.

(Vanante a) : Pour la préparation desdits siloxanes symétriques de formule III pour lesquels R₁, R₂, R₃, R_{d} et Rₑ sont indépendamment choisis parmi alkyle, aryle, alcényle et alcynyle, on peut faire réagir un chlorure de silyle de formule Cl₂SiR_{d}Rₑ avec un composé organométallique de formule :

CR₁R₂=CR₃-Mg-Hal

où R₁, R₂, R₃ sont tels que définis ci-dessus et hal représente un atome d'halogène dans les conditions habituelles de réaction mettant en jeu des magnésiens.

(Variante b) : Pour la préparation desdits siloxanes symétriques de formule III pour lesquels R₁ = R₂ = R₃ = H et R_{c}, R_{d} sont choisis parmi alcényle, alcynyle, aryle et alkyle, on peut faire réagir un chlorure de silyle de formule Cl₂SiR_{d}-CH=CH₂ avec un composé organométallique de formule :

Rₑ-Mg-hal

dans laquelle Rₑ est tel que défini ci-dessus et hal représente halogène.

Pour la mise en oeuvre de cette variante, l'homme du métier pourra se reporter à J. Gen. Chem., USSR, 1977, 47, 1402-1406.

(Variante c) : Pour la préparation desdits siloxanes symétriques de formule III dans laquelle R₁ = R₃ = H et R₂ représente alkyle, on peut faire réagir un siloxane de formule :

H-SiR_{d}Rₑ-O-SiR_{d}RₑH

avec deux équivalents d'un hydrocarbure acétylénique de formule H-C≡C-R₂ dans laquelle R₂ est tel que défini ci-dessus.

Des siloxanes cycliques de formule III sont décrits dans US 4 593 084.

Les composés de formule III dans laquelle X représente CR_{f}R_{g} et Y₁ et Y₂ représentent indépendamment -SiR_{d}Rₑ peuvent être préparés par mise en oeuvre d'un procédé analogue à l'un de ceux décrits dans :
- J. of Organometallic Chemistry, 1996, vol. 521, 99-107 (lequel procédé est plus particulièrement approprié à la préparation des composés symétriques de formule III dans laquelle Y₁ = Y₂ ; R_{f} = R_{g} = H ; R_{d}, Rₑ représentent alkyle ou aryle éventuellement substitué par alkyle ; R₃ représente un atome d'hydrogène ; alkyle ; ou aryle éventuellement substitué ; et R₁, R₂ sont choisis parmi un atome d'hydrogène et alkyle) ;
- J. of Organometallic Chemistry, 1997, vol. 545-546, 185-189 (lequel procédé est plus particulièrement approprié à la préparation de composés symétriques de formule III dans laquelle Y₁ = Y₂ ; R_{f} = R_{g} = Cl ou Br ; R_{d} et Rₑ représentent alkyle ; R₁ = R₂ = R₃ = un atome d'hydrogène) ;
- J. Chem. Soc., Perkin Trans II, 1987, p. 381 (lequel procédé est plus particulièrement approprié à la préparation des composés symétriques de formule III dans laquelle Y₁ = Y₂ ; R_{f} = R_{g} = SiG₁G₂G₃ ; R_{d} et Rₑ représentent alkyle ; R₁ = R₂ = R₃ = un atome d'hydrogène).

Les carbènes de formules II.1 et II.2 peuvent être préparés par déprotonation de sels d'imidazolium, de sels de tétrazolium, de sels de triazolium, ou de sels de pyrazolium suivant le cas, sous l'action d'une base.

Ces réactions peuvent être schématisées comme suit :

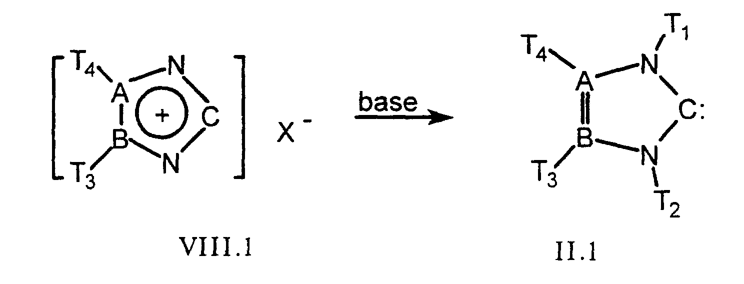

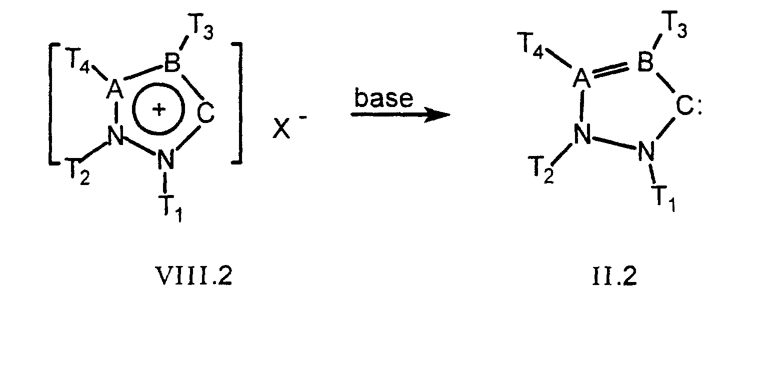

Dans ces schémas réactionnels, T₁, T₂, T₃, T₄, A et B sont tels que définis ci-dessus pour la formule I et X ⁻ représente un anion.

La nature de l'anion X ⁻ n'est pas critique selon l'invention. L'anion X ⁻ est l'anion dérivé d'un acide de Brönsted (acide protique) organique ou minéral. Habituellement, l'anion X ⁻ est dérivé d'un acide présentant un pKa inférieur à 6. De préférence, X ⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule Gₒ-COOH dans laquelle Gₒ représente alkyle, et par exemple (C₁-C₂₂)alkyle ; ou bien aryle, et par exemple (C₆-C₁₈)aryle éventuellement substitué par un ou plusieurs alkyle, de préférence un ou plusieurs (C₁-C₆)alkyle ; les acides sulfoniques de formule Gₒ-SO₃H dans laquelle Gₒ est tel que défini ci-dessus ; et les acides phosphoniques de formule Gₒ-PO₃H dans laquelle Gₒ est tel que défini ci-dessus ; d'autres acides sont HF, HCl, HBr, HI, H₂SO₄, H₃PO₄ et HClO₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

Selon l'invention, on préfère plus particulièrement les anions X ⁻ dérivés des acides HF, HCl, HBr, HI, H₂SO₄ et H₃PO₄.

Ainsi, des anions X ⁻ particulièrement préférés, selon l'invention, sont les anions halogénure, sulfate, hydrogénosulfate, phosphate, hydrogénophosphate et dihydrogénophosphate. On peut également mentionner, à titre d'anion, les tétrafluoroborates et hexaphénylphosphate.

Les bases utilisables pour la déprotonation des sels de formules VIII.1 et VIII.2 sont des bases fortes choisies parmi les hydrures de métal alcalin, les hydroxydes de métal alcalin, les carboxylates de métal alcalin, les alcoolates de métal alcalin et les amidures de métal alcalin.

Des exemples de base appropriée sont donc l'hydrure de sodium, l'hydroxyde de potassium, le méthylate de sodium, le tert-butylate de potassium, le diisopropylamidure de lithium et leurs mélanges.

La réaction de déprotonation est de préférence réalisée dans un solvant capable de dissoudre le sel de départ de formule VIII.1 ou VIII.2, ainsi que les autres réactifs.

La nature du solvant dépend également de la force de la base. En effet, dans le cas d'une base forte et de sels de départ particulièrement réactifs, il peut être nécessaire d'opérer à basse température.

Généralement, la température réactionnelle est comprise entre 40° C et -78° C, préférablement entre 30 et -50° C, mieux encore entre 25 et -40° C, par exemple entre 20 et -30° C.

Des solvants utilisables dans le procédé de préparation des carbènes sont les éthers cycliques ou non, tels que l'éther de diéthyle, l'éther de diisopropyle, le tétrahydrofuranne, le dioxanne, le diméthoxyéthane ou l'éther diméthylique du diéthylèneglycol.

D'autres solvants utilisables sont le diméthylsulfoxyde, le diméthylformamide, le diméthylacétamide, l'hexaméthylphosphorylamide : [(CH₃)₂N]₃PO et l'hexaméthylphosphoramide [(CH₃)₂N]₃P.

Les carbènes de formule II.1 dans lesquels A et B représentent tous deux un atome de carbone peuvent également être préparés par réduction des thiones correspondantes de formule IX :

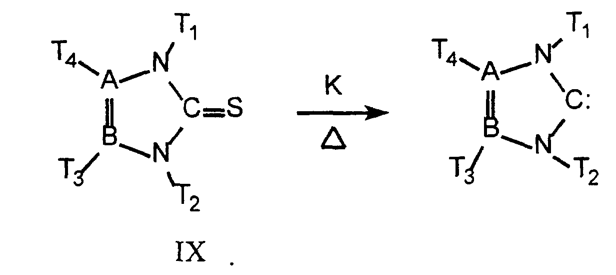

Cette réaction a été décrite par N. Kuhn dans Synthesis, 1993, 561. De préférence, la réduction est conduite dans un solvant du type éther ou amide, tel que défini ci-dessus, à une température comprise entre 50 et 150° C, en présence de potassium.

Les sels de départ de formule VIII. 1 et VIII.2 peuvent quant à eux préparés par réaction des imidazoles, pyrazoles, triazoles et tétrazoles correspondants avec un acide approprié.

La nature de l'anion X ⁻ dans les sels de formule VIII.1 et VIII.2 dépend de l'acide utilisé à cette étape. Les acides utilisables sont par exemple ceux énumérés ci-dessus et dont dérive X ⁻.

Une autre méthode de synthèse des sels de formule VIII.1 dans laquelle A = B = C est décrite dans US 5 077 414.

Ce procédé comprend la réaction d'un composé X α-dicarbonylé de formule : 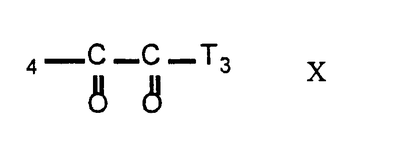 dans laquelle T₃ et T₄ sont tels que définis ci-dessus avec HCHO et deux amines de formules T₁-NH₂ et T₂-NH₂ en présence d'un acide approprié.

D'autres méthodes de préparation des sels de formule VIII. 1 et VIII.2 sont proposées dans Chem. Eur. J. 1996, 2, n° 12, pages 1627-1636 et Angew. Chem. Int. Ed. Engl. 1997, 36, 2162-2187.

Les composés de formule IX peuvent être préparés par condensation d'une thiourée appropriée de formule XI : 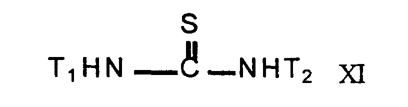 avec une α-hydroxycétone de formule XII : 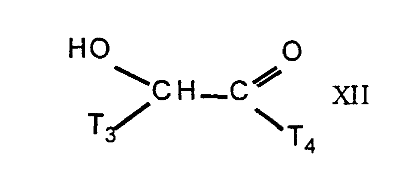 dans lesquelles T₁, T₂, T₃ et T₄ sont tels que définis ci-dessus. Des conditions opératoires appropriées sont notamment décrites par N. Kuhn dans Synthesis, 1993, 561.

Selon un mode de réalisation particulièrement préféré de l'invention, le complexe métallique de l'invention a pour formule : 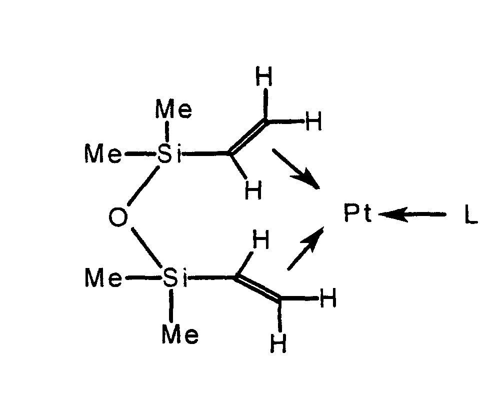 dans laquelle L est tel que défini ci-dessus.

Une méthode simple de préparation de ce complexe consiste à faire réagir le carbène L avec le catalyseur de Karstedt de formule moyenne Pt₂[ViMe₂Si-O-SiMe₂Vi]₃ dans laquelle Vi représente le radical vinyle.

Cette réaction peut être réalisée en masse ou dans un solvant.

Des exemples de solvants appropriés sont les éthers cycliques ou non, tels que l'éther de diéthyle, l'éther de diisopropyle, le tétrahydrofuranne, le dioxanne, le diméthoxyéthane ou l'éther diméthylique de diéthylèneglycol ; les amides tels que le diméthylformamide, ou le diméthylacétamide ; les hydrocarbures aromatiques (tels que le toluène, les xylènes et plus particulièrement le toluène) ; et les alcools aliphatiques du type (C₁-C₄)alcanol (tels que l'éthanol ou l'isopropanol).

De façon avantageuse, la réaction est conduite dans un éther, et préférablement dans le tétrahydrofuranne.

La température de réaction varie habituellement entre 10 et 50° C, de préférence entre 15 et 35° C, très préférablement entre 20 et 25° C.

Il est souhaitable d'opérer en présence d'un léger excès de carbène par rapport au platine. Ainsi, le rapport molaire du carbène L au platine varie généralement entre 1 et 1,3, de préférence entre 1 et 1,1.

Une façon simple de procéder consiste à couler, à la température appropriée, une solution du carbène dans un solvant, dans un réacteur contenant une solution du catalyseur de Karstedt dans ce même solvant.

La molarité des solutions du carbène et du catalyseur n'est pas critique selon l'invention.

Selon un autre de ses aspects, l'invention concerne une composition catalytique comprenant, à titre de matière active, un ou plusieurs complexes métalliques selon l'invention.

Les complexes de formule I de l'invention sont utilisables comme catalyseur des réactions d'hydrosilylation. Les catalyseurs de l'invention permettent une catalyse homogène de la réaction.

Par réaction d'hydrosilylation, on entend selon l'invention la réaction d'un composé à double liaison éthylénique ou à triple liaison acétylénique (composé insaturé) avec un composé présentant au moins un motif 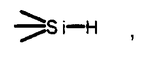 de façon à former une liaison C-Si.

La réaction d'hydrosilylation peut être schématisée comme suit, dans le cas d'un composé à double liaison éthylénique : 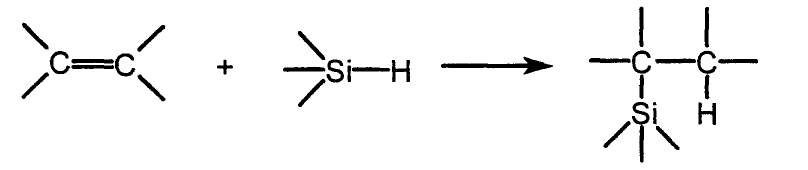 et, dans le cas d'un composé à triple liaison acétylénique :

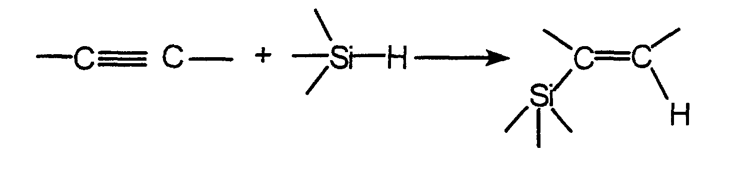

Les composés à double liaison éthylénique peuvent comprendre une ou plusieurs doubles liaisons et de 2 à 40 atomes de carbone. Ces composés peuvent être des hydrocarbures aliphatiques à chaîne hydrocarbonée linéaire ou ramifiée, ou bien des hydrocarbures cycliques, lesdits hydrocarbures cycliques ou aliphatiques portant éventuellement un ou plusieurs substituants de type (C₆-C₁₈)aryle éventuellement substitué par (C₁-C₆)alkyle. Les doubles liaisons sont généralement terminales. De préférence, le composé à double liaison éthylénique nrésente une seule double liaison

Des exemples d'oléfines sont l'éthylène, le propylène, le 1-butylène, le 1-pentène, le 2-méthylbutène-1, le 1-hexène, le 1-heptène, le 1-octène, le 3-éthylhexène-1, le 1-décène, le 4,4-diméthylnonène-1, le vinylcyclohexène, le styrène et le 2-vinylnaphtalène.

Les composés à triple liaison acétylénique peuvent comprendre une ou plusieurs triple liaisons et de 2 à 40 atomes de carbone. Ces composés sont généralement des hydrocarbures aliphatiques à chaîne hydrocarbonée, linéaire ou ramifiée, éventuellement substituée par (C₃-C₁₀)cycloalkyle (lequel cycloalkyle peut porter éventuellement un ou plusieurs (C₁-C₆)alkyle) ou/et par (C₆-C₁₀)aryle (lequel aryle peut porter éventuellement un ou plusieurs (C₁-C₆)alkyle). De préférence, les composés à triple liaison acétylénique présentent une seule triple liaison. Les triples liaisons sont généralement terminales. Des exemples en sont : éthynyle, 2-propynyle, 1-propynyle et 2-pentèn-4-ynyle.

L'hydrosilylation de composés comprenant à la fois une ou plusieurs doubles liaisons éthyléniques et une ou plusieurs triples liaisons acétyléniques est également envisageable dans le cadre de l'invention.

Dans les conditions opératoires normalement prescrites dans la littérature pour les réactions d'hydrosilylation, on observe la formation de deux types de sous-produits de la réaction d'hydrosilylation, à savoir les produits d'isomérisation et les produits d'hydrogénation. Les produits d'isomérisation résultent de l'isomérisation des doubles liaisons. Les produits d'hydrogénation résultent de l'hydrogénation des doubles et triples liaisons.

De façon surprenante, lorsqu'on réalise l'hydrosilylation utilisant les complexes métalliques de l'invention comme catalyseur, la formation de ces sous-produits est fortement limitée. Plus particulièrement, on constate une forte réduction du taux d'isomères formés.

La réaction d'hydrosilylation peut être réalisée dans un solvant ou en l'absence de solvant. En variante, l'un des réactifs peut jouer le rôle de solvant : par exemple le composé à double liaison éthylénique ou à triple liaison acétylénique.

Des solvants appropriés sont des solvants miscibles avec le composé à motif Si-H.

Dans les conditions de la réaction d'hydrosilylation, le complexe catalyseur de l'invention doit être solubilisé dans le milieu réactionnel.

Selon un mode de réalisation préféré de l'invention, le milieu réactionnel de la réaction de préparation du complexe catalyseur est utilisé tel quel ou après dilution, sans isolement intermédiaire.

Le composé à motif Si-H peut être un hydrure de silicium de formule XIII : 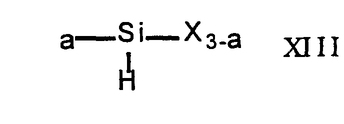 dans laquelle:
X est un radical comprenant un hétéroatome tel que O, Si, un atome d'halogène ou l'atome de carbone d'un groupe aliphatique ou aromatique ;
R est un atome d'hydrogène, un groupe alkyle, un groupe aryle, un groupe cycloalkyle, un groupe alcoxy, un groupe aryloxy ou un groupe cycloalcoxy ;
a est un nombre entier de 0 à 3.

II doit être entendu que, selon l'invention, les groupes aliphatiques, aromatiques, alkyle, aryle, cycloalkyle, alcoxy, aryloxy, cycloalcoxy, peuvent être substitués ou non. La nature des substituants est définie de façon à ne pas donner lieu à des réactions secondaires lors de la réaction d'hydrosilylation.

Des exemples appropriés de silane sont HSi(OC₂H₅)₃ et HSi(C₂H₅)₃.

Le composé à motif Si-H peut être un siloxane de formule XIV : 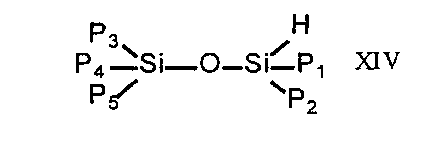 dans laquelle P₁ à P₅ sont indépendamment choisis parmi alkyle, aryle, alcoxy, aryloxy, arylalkyle ou arylalcoxy éventuellement substitués, P₃, P₄ et/ou P₅ pouvant représenter également un atome d'hydrogène.

De préférence, P₁ à P₅ sont indépendamment choisis parmi un groupe (C₁-C₂₂)alkyle, de préférence (C₁-C₁₀)alkyle ; un groupe (C₆-C₁₀)aryle éventuellement substitué par un ou plusieurs (C₁-C₁₀)alkyle et/ou (C₁-C₁₀)alcoxy ; un groupe (C₁-C₂₂)alcoxy, de préférence (C₁-C₁₀)alcoxy ; (C₆-C₁₀)aryloxy dans lequel la partie aryle est éventuellement substituée par (C₁-C₆)alkyle et/ou (C₁-C₆)alcoxy ; (C₆-C₁₀)aryl-(C₁-C₁₀)alkyle dans lequel la partie aryle est éventuellement substituée par (C₁-C₆)alkyle et/ou (C₁-C₆)alcoxy ; ou bien (C₆-C₁₀)aryl(C₁-C₁₀)alcoxy dans lequel la partie aryle est éventuellement substituée par (C₁-C₆)alkyle et/ou (C₁-C₆)alcoxy.

Le composé à motif Si-H peut être un polymère de type polyhydrogénosiloxane. D'autres polymères et copolymères appropriés sont les polyhydrosilanes comprenant un nombre important de motifs récurrents contenant des liaisons Si-H.

De préférence, les polymères utilisables ont des motifs récurrents de formule : 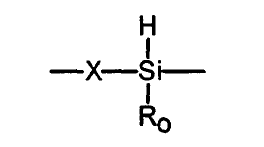 dans laquelle X est un radical comprenant un hétéroatome tel que O, Si ou l'atome de carbone d'un groupe aliphatique ou aromatique ; et Rₒ est un atome d'hydrogène ou un groupe organique choisi parmi alkyle, aryle, cycloalkyle, alcoxy, aryloxy ou cycloalcoxy. A titre d'exemples, on peut mentionner les polyhydrosiloxanes de formule : 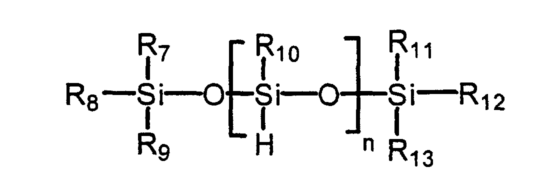 dans laquelle R₇ à R₁₃ sont indépendamment un atome d'hydrogène ou un groupe organique. De préférence, R₇, R₈, R₉, R₁₀, R₁₁, R₁₂ et R₁₃ sont choisis parmi un atome d'hydrogène, un groupe alkyle, aryle, cycloalkyle, alcoxy, aryloxy et cycloalcoxy ;
n est un entier au moins égal à 1 et de préférence au moins égal à 10 et, mieux, compris entre 10 et 100.

Des polymères appropriés sont les polyméthylhydrogénosiloxane, polydiméthylsiloxane à groupe -SiH terminal, les copolymères méthylhydrogénodiméthylsiloxane, les copolymères méthylhydrogénométhyloctylsiloxane, et les polymères méthylhydrogénocyclosiloxane.

En général, les polymères utilisables dans la réaction ont une masse moléculaire moyenne de 300 ou plus et de préférence comprise entre 300 et 10000 (g/mol).

Des exemples d'hydrures de silicium sont décrits dans US 5 359 113.

Des exemples de solvants utilisables pour l'hydrosilylation sont notamment les hydrocarbures aliphatiques (tels que pentane, hexane, heptane, pentaméthylheptane ou les fractions de distillation du pétrole) ; les hydrocarbures aromatiques (tels que le benzène le toluène et les xylènes : ortho-xylène paraxylène et méta-xylène) ; les hydrocarbures aliphatiques ou aromatiques halogénés (tels que tétrachloroéthylène) ; ou les éthers (tels que le tétrahydrofuranne ou le dioxanne).

La réaction d'hydrosilylation peut être conduite à une température comprise entre 15° C et 300° C, par exemple entre 20 et 240° C, mieux encore entre 70 et 200° C, notamment entre 50 et 140° C, très préférablement entre 50 et 100° C.

La quantité relative de composé insaturé et de composé à motif Si-H peut être contrôlée de façon à assurer la réaction de toutes les insaturations avec des liaisons Si-H.

Il est préférable néanmoins d'opérer en présence d'un excès molaire d'insaturation.

Généralement, le rapport molaire des insaturations aux liaisons Si-H varie entre 1:100 et 10:1.

La concentration en composé insaturé dans le milieu réactionnel est comprise entre 2 et 50% en poids.

Selon l'invention la réaction d'hydrosilylation est réalisée en présence d'une quantité catalytique d'un ou plusieurs complexes selon l'invention. Par quantité catalytique on entend moins d'un équivalent molaire de platine par rapport à la quantité d'insaturations présentes dans le milieu réactionnel.

De façon générale il suffit d'introduire dans le milieu réactionnel moins de 1000 ppm, de préférence moins de 100 ppm, mieux encore moins de 50 ppm de platine calculé par rapport à la masse totale du composé insaturé et du composé à motifs Si-H.

Selon un mode de réalisation préféré de l'invention on place, sous agitation, dans un réacteur, le composé insaturé, le catalyseur et le solvant. On porte l'ensemble à la température souhaitée et on introduit, sous agitation, le composé à motif

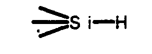

L'invention est illustrée dans la suite à la lumière des exemples suivants.

### EXEMPLE 1

### 1 - Préparation du carbène de formule :

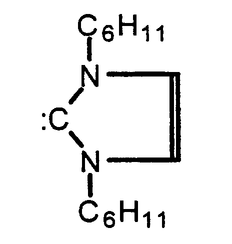

(cf. Chem. Eur. J. 1996, 2, 1627).

Pour cette réaction, toute la verrerie utilisée est séchée à l'étuve à 150° C pendant une nuit puis refroidie sous argon.

Le THF est distillé sur sodium/benzophénone juste avant utilisation.

Un tricol de 100 ml est chargé avec 2,70 g (10 mmol) de chlorure de 1,3-dicyclohexylimidazolinium puis purgé par un courant d'argon avant d'être mis en suspension dans 20 ml de THF. Environ 50 ml d'ammoniac sont ensuite condensés à 78° C dans le tricol entraînant la dissolution partielle du sel. Le bain acétone/carboglace est retiré et 270 mg de NaH à 95% (10,7 mmol - 1,07 éq.) sont ajoutés lentement à l'aide d'une ampoule à solide. Chaque addition de NaH est suivie par un dégagement gazeux important (H₂) et le sel en suspension se dissout progressivement. Le mélange réactionnel est agité pendant 1 h30 au reflux du solvant. L'ammoniac est ensuite évaporé et une solution jaune pâle est obtenue ainsi qu'un solide en suspension (NaCl). Cette solution dont la concentration en carbène est de 0,5M dans le THF est utilisée immédiatement pour la préparation des complexes.

**2 - Préparation du complexe de platine de formule :**

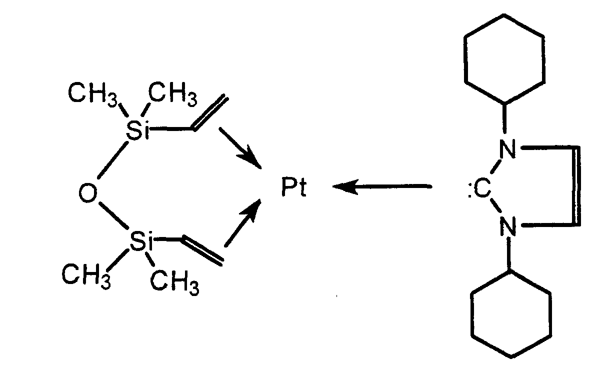

On prépare une solution de Karstedt à 10% en poids en platine (soit 1,52 mmol de platine) conformément à la procédure décrite dans US 3 775 452.

A 3 g de cette solution, maintenue sous agitation et diluée dans 10 ml de tétrahydrofuranne, on ajoute goutte à goutte à l'aide d'une ampoule à brome, 3,2 ml d'une solution 0,5 M du carbène de formule : 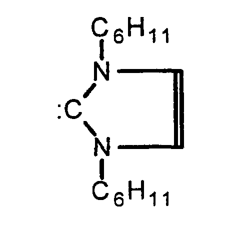 dans le tétrahydrofurane. L'addition est complète au bout de 10 minutes. Le mélange réactionnel est ensuite agité pendant 50 minutes à température ambiante. Le cas échéant, le léger insoluble est filtré et le mélange réactionnel est concentré sous vide.

Après concentration, un résidu visqueux légèrement jaune est obtenu. En quelques heures, un solide blanc abondant précipite dans le divinyltétraméthyldisiloxane résiduel. Celui-ci est filtré, lavé par quelques millilitres d'hexaméthyldisilazane, puis de pentane. On obtient ainsi 570 mg (rendement 60%) d'une poudre blanche analytiquement pure.

Une fraction de cette poudre est recristallisée dans un mélange dichlorométhane/éthanol absolu. Les cristaux résultants sont analysés par diffraction des rayons X. L'analyse confirme la structure du complexe obtenu.

### EXEMPLE 2

### 1 -Préparation du carbène de formule :

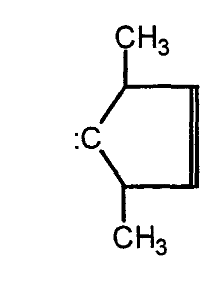

Ce carbène est préparé par mise en oeuvre du mode opératoire illustré à l'exemple 1, paragraphe 1, sinon que les 2,7 g (10 mmol) de chlorure de 1,3-dicyclohexylimidazolinium sont remplacés par 2,3 g (10 mmol) d'iodure de 1,3-diméthylimidazolinium.

### 2 - Préparation du complexe du platine de formule :

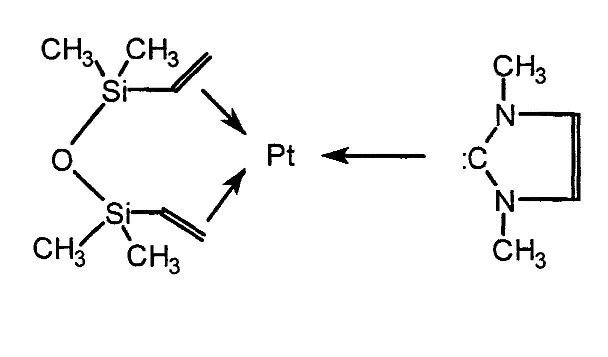

Ce complexe est préparé par mise en oeuvre du mode opératoire de l'exemple 1, sinon que le carbène utilisé comme produit de départ a pour formule:

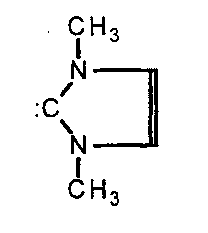

Après concentration, une pâte jaune est obtenue. Celle-ci est filtrée, lavée abondammant par du pentane chaud. Un solide blanchâtre est isolé (rendement 35%), lequel est recristallisé dans l'éthanol. Les cristaux résultants sont analysés par diffraction des rayons X. L'analyse confirme la structure du complexe obtenu.

### EXEMPLE 3

### Hydrosilylation du oct-1-ène par action du (CH₃)₃Si-O-Si(CH₃)(H)-OSi(CH₃)₃

Dans un réacteur tricol de 250 ml équipé d'un réfrigérant, d'une agitation magnétique, d'une gaine thermométrique et chauffé par un bain d'huile, on place 5g (45 mmol) d'oct-1-ène, 10 g (1 équivalent de motifs SiH par rapport à l'oct-1-ène) de (CH₃)₃SiO-Si(CH₃)(H)-OSi(CH₃)₃, 5 g de dodécane (utilisé comme étalon interne pour l'analyse par chromatographie en phase gazeuse), et de l'orthoxylène en quantité suffisante de façon à assurer une concentration de 0,5M en réactif silylé et en oct-1-ène. L'ensemble est porté à 70° C et maintenu sous agitation.

Puis, une solution du catalyseur dans le dichlorométhane contenant 30 ppm de platine calculés par rapport à la quantité totale de dérivé silylé et de oct-1-ène est ajoutée au mélange précédent, en une seule fois.

L'évolution de la réaction est suivie par chromatographie en phase gazeuse (CPG).

Les prélèvements successifs analysés par CPG sont préalablement élués sur une colonne de charbon actif.

La réaction d'hydrosilylation précédente est réalisée dans les mêmes conditions à partir de trois catalyseurs différents :
- le catalyseur de Karstedt préparé selon US 3 775 452 ;
- le catalyseur préparé à l'exemple 1 ;
- le catalyseur préparé à l'exemple 2.

Les résultats obtenus exprimés en taux de transformation (τ) de liaisons Si-H dans le dérivé silylé et en pourcentage d'isomérisation (p) sont rapportés dans le tableau suivant.

**TABLEAU**

| Catalyseur | τ (%) | p (%) |
|---|---|---|
| Karstedt | 80 | 17 |
| exemple 1 | 82 | 4,5 |
| exemple 2 | 85 | 3,7 |

On constate que les catalyseurs de l'invention conduisent à des pourcentages d'isomérisation bien inférieurs (d'un facteur 3).

### EXEMPLE 4

Dans cet exemple, on réalise l'hydrosilylation du 1-octène par action de (CH₃)₃SiO-Si(H)(CH₃)-OSi(CH₃)₃ en présence du complexe de l'exemple 2 comme catalyseur.

Les quantités de réactifs et de catalyseur mises en présence sont les mêmes qu'à l'exemple 3. Seule la façon de procéder à été modifiée. Dans un tricol de 100 ml équipé d'une agitation magnétique, d'un réfrigérant et chauffé par un bain d'huile, on place 5 g (45 mmol) de oct-1-ène, 5 g de dodécane et la solution du catalyseur dans le dichlorométhane (laquelle contient 30 ppm de platine calculés par rapport à la quantité totale de dérivé silylé et de oct-1-ène). Cette solution est maintenue sous agitation et portée à 70° C. Puis 10 g (1 équivalent de motifs Si-H par rapport à l'oct-1-ène) de (CH₃)₃SiO-Si(CH₃)(H)-OSi(CH₃)₃ sont introduits goutte à goutte dans le milieu réactionnel. L'évolution de la réaction est suivie par chromatographie en phase gazeuse. On obtient un taux de transformation de liaisons Si-H dans le dérivé silylé de 96% et un pourcentage d'isomérisation de 1,5%.

## Revendications

1. Complexe métallique de formule I 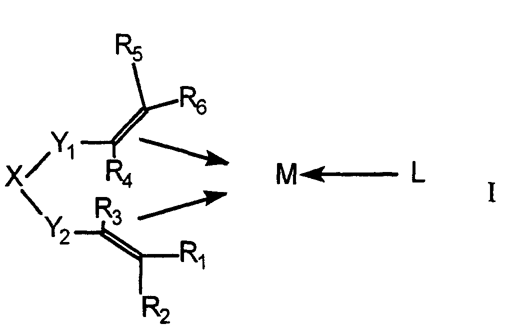 dans laquelle :
M représente un métal à l'état d'oxydation 0 choisi parmi les métaux du groupe 8 du tableau périodique tel que publié dans Handbook of Chemistry and Physics, 65^{ème} édition, 1984-1985 ;
X repésente O, NRₐ ou CR_{f}R_{g} ;
Y₁ et Y₂ représentent indépendamment l'un de l'autre CR_{b}R_{c} ou SiR_{d}Rₑ ;
R₁, R₂, R₅ et R₆, identiques ou différents, sont choisis parmi un atome d'hydrogène, un groupe alkyle et un groupe aryle éventuellement substitué par alkyle ;
R₃, R₄, Rₐ, R_{b}, R_{c} sont indépendamment choisis parmi un atome d'hydrogène ; un groupe alkyle ; acyle ; aryle éventuellement substitué par alkyle ; cycloalkyle éventuellement substitué par alkyle ; et arylalkyle dans lequel la partie aryle est éventuellement substitué par alkyle ;
R_{d} et Rₑ sont indépendamment choisis parmi alcényle ; alcynyle ; alkyle ; alcoxy ; acyle ; aryle éventuellement substitué par alkyle ; cycloalkyle éventuellement substitué par alkyle ; et arylalkyle dans lequel la partie aryle est éventuellement substituée par alkyle ; ou bien
lorsque Y₁ et Y₂ représentent indépendamment SiR_{d}Rₑ, deux groupes R_{d} liés à deux atomes de silicium distincts forment ensemble une chaîne de formule : 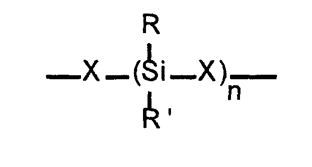 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3 un seul atome de silicium de ladite chaîne peut être substitué par un ou deux groupes alcényle ou alcynyle ; ou bien
lorsque Y₁ et Y₂ représentent indépendamment SiR_{d}Rₑ, deux groupes R_{d} liés à des atomes de silicium distincts forment ensemble une chaîne hydrocarbonée saturée, les deux groupes R_{b} ensemble avec lesdits atomes de silicium et X formant un cycle de 6 à 10 chaînons ; ou bien
lorsque Y₁ et Y₂ représentent indépendamment CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X forment un cycle de 6 à 10 chaînons ; et
R_{f} et R_{g} représentent indépendamment l'un de l'autre un atome d'hydrogène ; un groupe alkyle ; acyle ; aryle éventuellement substitué par alkyle ; cycloalkyle éventuellement substitué par alkyle ; arylalkyle dans lequel la partie aryle est éventuellement substituée par alkyle ; un atome d'halogène ; un groupe alcényle ; un groupe alcynyle ; ou un groupe SiG₁G₂G₃ où G₁, G₂ et G₃ sont indépendamment l'un de l'autre alkyle ; alkoxy ; aryle éventuellement substitué par alkyle ou alkoxy ; ou arylalkyle dans lequel la partie aryle est éventuellement substituée par alkyle ou alkoxy ;
L représente un carbène de formule II.1 ou II.2 : 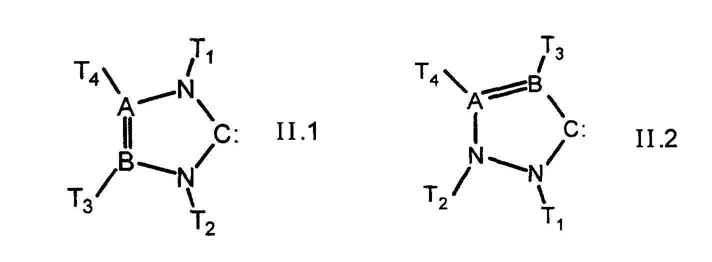 dans lesquelles:
- A et B représentent indépendamment C ou N, étant entendu que lorsque A représente N, alors T₄ ne représente rien et lorsque B représente N, alors T₃ ne représente rien ;
- T₃ et T₄ représentent indépendamment un atome d'hydrogène ; un groupe alkyle ; cycloalkyle éventuellement substitué par alkyle ou alkoxy ; aryle éventuellement substitué par alkyle ou alkoxy; alcényle ; alcynyle ; ou arylalkyle dans lequel la partie aryle est éventuellement substituée par alkyle ou alkoxy ;
- T₁ et T₂ représentent indépendamment un groupe alkyle ; un groupe alkyle perfluoré ou éventuellement substitué par un groupe perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- les substituants T₁, T₂, T₃ et T₄ peuvent former deux à deux, lorsqu'ils sont situés sur deux sommets adjacents dans les formule II.1 et II.2, une chaîne hydrocarbonée saturée ou insaturée.

2. Complexe métallique selon la revendication 1, dans lequel X représente O ; Y₁ et Y₂ représentent indépendamment l'un de l'autre SiR_{d}Rₑ.

3. Complexe métallique selon l'une quelconque des revendications précédentes, dans lequel L représente un carbène de formule II.1.

4. Complexe métallique selon l'une quelconque des revendications précédentes, **caractérisé en ce que** R₁, R₂, R₅ et R₆ sont des atomes d'hydrogène.

5. Complexe métallique selon l'une quelconque des revendications précédentes, **caractérisé en ce que** R₃ et R₄ représentent un atome d'hydrogène ; un groupe alkyle ; aryle éventuellement substitué par alkyle ; ou cycloalkyle éventuellement substitué par alkyle.

6. Complexe métallique selon l'une quelconque des revendications précédentes, **caractérisé en ce que** A et B représentent tous deux un atome de carbone.

7. Complexe métallique selon l'une quelconque des revendications précédentes, **caractérisé en ce que** T₃ et T₄ représentent un atome d'hydrogène.

8. Complexe métallique selon l'une quelconque des revendications précédentes, **caractérisé en ce que** T₁ et T₂, identiques ou différents, représentent (C₁-C₈)alkyle ou (C₃-C₈)cycloalkyle ; ou bien R₃ et R₄, identiques ou différents, représentent (C₁-C₈)alkyle ou (C₃-C₈)cycloalkyle ; ou bien encore T₁, T₂, R₃ et R₄, identiques ou différents, représentent (C₁-C₈)alkyle ou (C₃-C₈)cycloalkyle.

9. Complexe métallique selon l'une quelconque des revendications précédentes, **caractérisé en ce que** T₁ et T₂ sont identiques et représentent (C₃-C₈)cycloalkyle.

10. Complexe métallique selon l'une quelconque des revendications précédentes, **caractérisé en ce que** M est un métal choisi parmi Pt, Pd et Ni.

11. Complexe métallique selon l'une quelconque des revendications précédentes, **caractérisé en ce que** M est le platine à l'état d'oxydation 0.

12. Complexe métallique selon l'une quelconque des revendications précédentes, **caractérisé en ce que** R₃ = R₄ ; R₁ = R₆ ; R₂ = R₅ ; et soit Y₁ = Y₂, soit Y₁ = CR_{b}¹R_{c} et Y₂ = CR_{b}²R_{c} où R_{b}¹ et R_{b}² forment ensemble une chaîne symétrique, soit encore Y₁ = SiR_{d}¹Rₑ et Y₂ = SiR_{d}²Rₑ où R_{d}¹ et R_{d}² forment ensemble une chaîne symétrique.

13. Complexe métallique selon l'une quelconque des revendications précédentes, de formule : 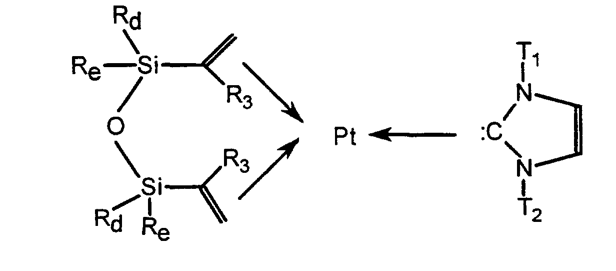 dans laquelle :
R₃ représente un atome d'hydrogène ; un groupe (C₁-C₈)alkyle ; ou un groupe (C₃-C₈)cycloalkyle éventuellement substitué par (C₁-C₄)alkyle ;
T₁ et T₂ sont identiques et représentent (C₁-C₈)alkyle ou (C₃-C₈)cycloalkyle ;
R_{d} et Rₑ sont tels que définis à la revendication 1.

14. Procédé d'hydrosilylation d'oléfines ou de dérivés acétyléniques, **caractérisé en ce qu'**il est mis en oeuvre en présence d'un catalyseur comprenant le complexe métallique de l'une quelconque des revendications 1 à 13.

15. Procédé d'hydrosilylation selon la revendication 14, comprenant la réaction d'une oléfine avec un siloxane à motif Si-H.

16. Composition catalytique comprenant, à titre de matière active, un ou plusieurs complexes métalliques selon l'une quelconque des revendications 1 à 13.

## Patentansprüche

1. Metallkomplex der Formel I 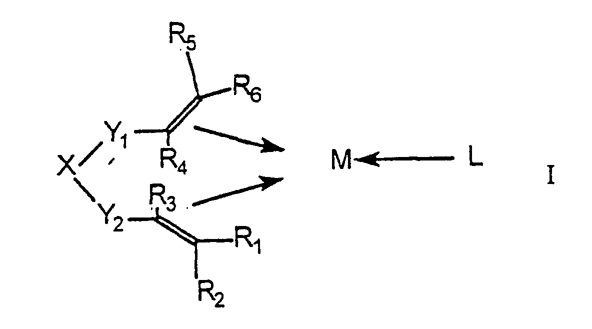 worin:
M ein Metall im Oxidationszustand 0 bedeutet, ausgewählt unter den Metallen der Gruppe 8 des Periodensystems wie im Handbook of Chemistry and Physics, 65. Ausgabe, 1984-1985, veröffentlicht;
X für O, NRₐ oder CR_{f}R_{g} steht;
Y₁ und Y₂ unabhängig voneinander CR_{b}R_{c} oder SiR_{d}Rₑ bedeuten;
R₁, R₂, R₅ und R₆, identisch oder verschieden, unter einem Wasserstoffatom, einer Alkylgruppe und einer gegebenenfalls durch Alkyl substituierten Arylgruppe ausgewählt sind; R₃, R₄, Rₐ, R_{b}, R_{c} unabhängig voneinander unter einem Wasserstoffatom; einer Alkylgruppe; Acyl; gegebenenfalls durch Alkyl substituiertem Aryl; gegebenenfalls durch Alkyl substituiertem Cycloalkyl; und Arylalkyl, in dem der Arylteil gegebenenfalls durch Alkyl substituiert ist, ausgewählt sind;
R_{d} und Rₑ unabhängig voneinander unter Alkenyl; Alkinyl; Alkyl; Alkoxy; Acyl; gegebenenfalls durch Alkyl substituiertem Aryl; gegebenenfalls durch Alkyl substituiertem Cycloalkyl; und Arylalkyl, in dem der Arylteil gegebenenfalls durch Alkyl substituiert ist, ausgewählt sind; oder
wenn Y₁ und Y₂ unabhängig SiR_{d}Rₑ bedeuten, zwei an zwei verschiedenen Siliziumatome gebundene Gruppen R_{d} gemeinsam eine Kette der Formel: 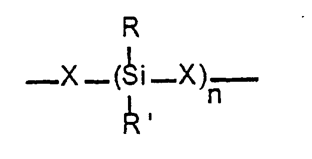 bilden, worin n eine ganze Zahl von 1 bis 3 ist; X wie vorstehend definiert ist; R und R', identisch oder verschieden, eine der vorstehend für Rₑ angegebenen Bedeutungen annehmen mit der Maßgabe, dass wenn n für 2 oder 3 steht, ein einziges Siliziumatom der besagten Kette durch ein oder zwei Alkenyl- oder Alkinylgruppen substituiert sein kann; oder wenn Y₁ und Y₂ unabhängig SiR_{d}Rₑ bedeuten, zwei an verschiedene Siliziumatome gebundene Gruppen R_{d} gemeinsam eine gesättigte Kohlenwasserstoffkette bilden, wobei die beiden Gruppen R_{b} gemeinsam mit den Siliziumatomen und X einen Ring mit 6 bis 10 Gliedern bilden; oder
wenn Y₁ und Y₂ unabhängig CR_{b}R_{c} bedeuten, zwei an verschiedene Kohlenstoffatome gebundene Gruppen R_{b} gemeinsam eine gesättigte Kohlenwasserstoffkette bilden, wobei die beiden Gruppen R_{b} gemeinsam mit den sie tragenden Kohlenstoffatomen und X einen Ring mit 6 bis 10 Gliedern bilden; und
R_{f} und R_{g} unabhängig voneinander ein Wasserstoffatom; eine Alkylgruppe; Acyl; gegebenenfalls durch Alkyl substituiertes Aryl; gegebenenfalls durch Alkyl substituiertes Cycloalkyl; Arylalkyl, in dem der Arylteil gegebenenfalls durch Alkyl substituiert ist; ein Halogenatom; eine Alkenylgruppe; eine Alkinylgruppe; oder eine Gruppe SiG₁G₂G₃ bedeuten, worin G₁, G₂ und G₃ unabhängig voneinander Alkyl; Alkoxy; gegebenenfalls durch Alkyl oder Alkoxy substituiertes Aryl; oder Arylalkyl, in dem der Arylteil gegebenenfalls durch Alkyl oder Alkoxy substituiert ist, bedeuten;
L ein Carben der Formel II.1 oder II.2 wiedergibt: 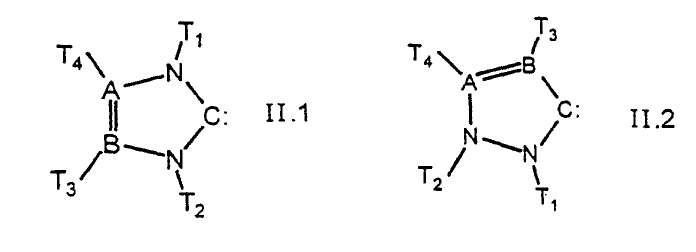 worin:
- A und B unabhängig für C oder N stehen mit der Maßgabe, dass wenn A für N steht, T₄ nichts bedeutet, und wenn B für N steht, T₃ nichts bedeutet;
- T₃ und T₄ unabhängig ein Wasserstoffatom; eine Alkylgruppe; gegebenenfalls durch Alkyl oder Alkoxy substituiertes Cycloalkyl; gegebenenfalls durch Alkyl oder Alkoxy substituiertes Aryl; Alkenyl; Alkinyl; oder Arylalkyl, in dem der Arylteil gegebenenfalls durch Alkyl oder Alkoxy substituiert ist, bedeuten;
- T₁ und T₂ unabhängig eine Alkylgruppe; eine perfluorierte oder gegebenenfalls durch eine Perfluoralkylgruppe substituierte Alkylgruppe; gegebenenfalls durch Alkyl oder Alkoxy substituiertes Cycloalkyl; gegebenenfalls durch Alkyl oder Alkoxy substituiertes Aryl; Alkenyl; Alkinyl; oder Arylalkyl, in dem der Arylteil gegebenenfalls durch Alkyl oder Alkoxy substituiert ist, bedeuten; oder
- die Substituenten T₁, T₂, T₃ und T₄ paarweise, wenn sie an zwei benachbarten Spitzen in den Formeln II.1 und II.2 gelegen sind, eine gesättigte oder ungesättigte Kohlenwasserstoffkette bilden.

2. Metallkomplex gemäß Anspruch 1, worin X für O steht; Y₁ und Y₂ unabhängig voneinander SiR_{d}Rₑ bedeuten.

3. Metallkomplex gemäß einem der vorhergehenden Ansprüche, worin L ein Carben der Formel II.1 bedeutet.

4. Metallkomplex gemäß einem der vorhergehenden Ansprüche, **dadurch gekennzeichnet, dass** R₁, R₂, R₅ und R₆ Wasserstoffatome bedeuten.

5. Metallkomplex gemäß einem der vorhergehenden Ansprüche, **dadurch gekennzeichnet, dass** R₃ und R₄ ein Wasserstoffatom; eine Alkylgruppe; gegebenenfalls durch Alkyl substituiertes Aryl; oder gegebenenfalls durch Alkyl substituiertes Cycloalkyl bedeuten.

6. Metallkomplex gemäß einem der vorhergehenden Ansprüche, **dadurch gekennzeichnet, dass** A und B alle beide ein Kohlenstoffatom bedeuten.

7. Metallkomplex gemäß einem der vorhergehenden Ansprüche, **dadurch gekennzeichnet, dass** T₃ und T₄ ein Wasserstoffatom bedeuten.

8. Metallkomplex gemäß einem der vorhergehenden Ansprüche, **dadurch gekennzeichnet, dass** T₁ und T₂, identisch oder verschieden, (C₁-C₈)-Alkyl oder (C₃-C₈)-Cycloalkyl bedeuten; oder R₃ und R₄, identisch oder verschieden, (C₁-C₈)-Alkyl oder (C₃-C₈)-Cycloalkyl bedeuten; oder T₁, T₂, T₃ und T₄, identisch oder verschieden, (C₁-C₈-Alkyl) oder (C₃-C₈)-Cycloalkyl bedeuten.

9. Metallkomplex gemäß einem der vorhergehenden Ansprüche, **dadurch gekennzeichnet, dass** T₁ und T₂ identisch sind und (C₃-C₈)-Cycloalkyl bedeuten.

10. Metallkomplex gemäß einem der vorhergehenden Ansprüche, **dadurch gekennzeichnet, dass** M ein Metall, ausgewählt unter Pt, Pd und Ni, ist.

11. Metallkomplex gemäß einem der vorhergehenden Ansprüche, **dadurch gekennzeichnet, dass** M Platin im Oxidationszustand 0 ist.

12. Metallkomplex gemäß einem der vorhergehenden Ansprüche, **dadurch gekennzeichnet, dass** R₃ = R₄; R₁ = R₆; R₂ = R₅; und entweder Y₁ = Y₂, oder Y₁ = CR_{b}¹R_{c} und Y₂ = CR_{b}²R_{c}, worin R_{b}¹ und R_{b}² gemeinsam eine symmetrische Kette bilden, oder aber Y₁ = SiR_{d}¹Rₑ und Y₂ = SiR_{d}²Rₑ, worin R_{d}¹ und R_{d}² gemeinsam eine symmetrische Kette bilden.

13. Metallkomplex gemäß einem der vorhergehenden Ansprüche der Formel: 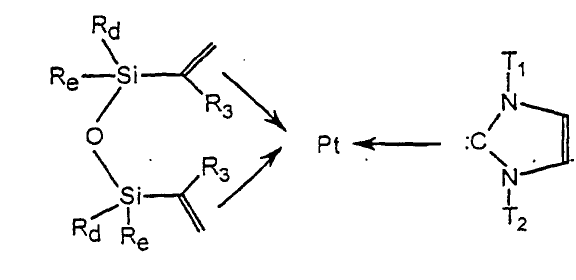 worin:
R₃ ein Wasserstoffatom; eine (C₁-C₈)-Alkylgruppe; oder eine (C₃-C₈)-Cycloalkylgruppe, die gegebenenfalls durch (C₁-C₄)-Alkyl subsitutiert ist, bedeutet;
T₁ und T₂ identisch sind und (C₁-C₈)-Alkyl oder (C₃-C₈)-Cycloalkyl bedeuten;
R_{d} und Rₑ wie in Anspruch 1 definiert sind.

14. Verfahren zur Hydrosilylierung von Olefinen oder acetylenischen Derivaten, **dadurch gekennzeichnet, dass** es in Gegenwart eines Katalysators, umfassend den Metallkomplex eines der Ansprüche 1 bis 13, durchgeführt wird.

15. Hydrosilylierungsverfahren gemäß Anspruch 14, umfassend die Reaktion eines Olefins mit einem Siloxan mit Si-H-Gruppierung.

16. Katalytische Zusammensetzung, umfassend als wirksamen Bestandteil einen oder mehrere Metallkomplexe gemäß einem der Ansprüche 1 bis 13.

## Claims

1. Metal complex of formula I 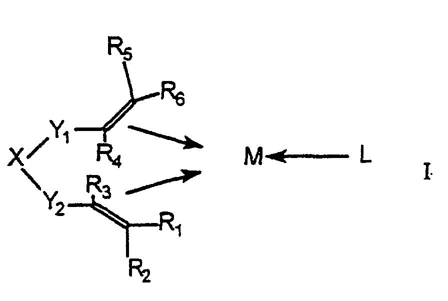 in which:
M represents a metal having an oxidation number 0 chosen from the group 8 metals in the Periodic Table as published in the Handbook of Chemistry and Physics, 65^{th} edition, 1984-1985;
X represents O, NRₐ or CR_{f}R_{g};
Y₁ and Y₂ represent, independently of each other, CR_{b}R_{c} or SiR_{d}Rₑ;
R₁, R₂, R₅ and R₆, which are identical or different, are chosen from a hydrogen atom, an alkyl group and an aryl group optionally substituted with alkyl;
R₃, R₄, Rₐ, R_{b}, R_{c} are independently chosen from a hydrogen atom; an alkyl group; an acyl group; an aryl group optionally substituted with alkyl; a cycloalkyl group optionally substituted with alkyl; and an arylalkyl group in which the aryl portion is optionally substituted with alkyl;
R_{d} and Rₑ are independently chosen from alkenyl; alkynyl; alkyl; alkoxy; acyl; aryl optionally substituted with alkyl; cycloalkyl optionally substituted with alkyl; and arylalkyl in which the aryl portion is optionally substituted with alkyl; or alternatively
when Y₁ and Y₂ independently represent SiR_{d}Rₑ, two R_{d} groups linked to two separate silicon atoms together form a chain of formula: 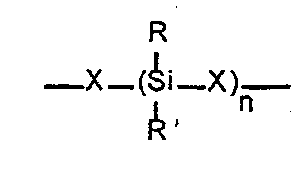 in which n is an integer from 1 to 3; X is as defined above; R and R', which are identical or different, take any one of the meanings given above for Rₑ, it being understood that when n is 2 or 3, a single silicon atom of said chain may be substituted with one or two alkenyl or alkynyl groups; or alternatively
when Y₁ and Y₂ independently represent SiR_{d}Rₑ, two R_{d} groups linked to separate silicon atoms together form a saturated hydrocarbon chain, the two R_{b} groups together with said silicon atoms and X forming a 6- to 10-membered ring; or alternatively when Y₁ and Y₂ independently represent CR_{b}R_{c}, two R_{b} groups linked to separate carbon atoms together form a saturated hydrocarbon chain, the two R_{b} groups together with the carbon atoms carrying them and X form a 6- to 10-membered ring; and
R_{f} and R_{g} represent, independently of each other, a hydrogen atom; an alkyl group; an acyl group; an aryl group optionally substituted with alkyl; a cycloalkyl group optionally substituted with alkyl; an arylalkyl group in which the aryl portion is optionally substituted with alkyl; a halogen atom; an alkenyl group; an alkynyl group; or a group SiG₁G₂G₃ where G₁, G₂ and G₃ are, independently of each other, alkyl; alkoxy; aryl optionally substituted with alkyl or alkoxy; or arylalkyl in which the aryl portion is optionally substituted with alkyl or alkoxy;
L represents a carbene of formula II.1 or II.2: 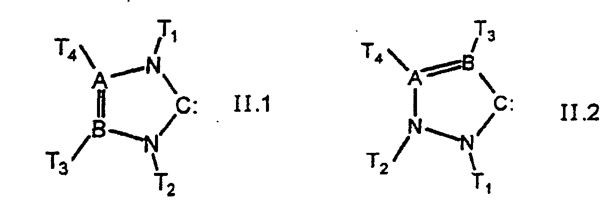 in which:
- A and B independently represent C or N, it being understood that when A represents N, then T₄ represents nothing and when B represents N, then T₃ represents nothing;
- T₃ and T₄ independently represent a hydrogen atom; an alkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy;
- T₁ and T₂ independently represent an alkyl group; an alkyl group which is perfluorinated or optionally substituted with a perfluoroalkyl group; a cycloalkyl group optionally substituted with alkyl or alkoxy; an aryl group optionally substituted with alkyl or alkoxy; an alkenyl group; an alkynyl group; or an arylalkyl group in which the aryl portion is optionally substituted with alkyl or alkoxy; or alternatively
- the substituents T₁, T₂, T₃ and T₄ may form in pairs, when they are located on two adjacent summits in the formulae II.1 and II.2, a saturated or unsaturated hydrocarbon chain.

2. Metal complex according to Claim 1, in which X represents 0; Y₁ and Y₂ represent, independently of each other, SiR_{d}Rₑ.

3. Metal complex according to either one of the preceding claims, in which L represents a carbene of formula II.1.

4. Metal complex according to any one of the preceding claims, **characterized in that** R₁, R₂, R₅ and R₆ are hydrogen atoms.

5. Metal complex according to any one of the preceding claims, **characterized in that** R₃ and R₄ represent a hydrogen atom; an alkyl group; an aryl group optionally substituted with alkyl; or a cycloalkyl group optionally substituted with alkyl.

6. Metal complex according to any one of the preceding claims, **characterized in that** A and B both represent a carbon atom.

7. Metal complex according to any one of the preceding claims, **characterized in that** T₃ and T₄ represent a hydrogen atom.

8. Metal complex according to any one of the preceding claims, **characterized in that** T₁ and T₂, which are identical or different, represent (C₁₋C₈)-alkyl or (C₃-C₈)cycloalkyl; or alternatively R₃ and R₄, which are identical or different, represent (C₁-C₈)alkyl or (C₃-C₈) cycloalkyl; or still alternatively T₁, T₂, R₃ and R₄, which are identical or different, represent (C₁-C₈)alkyl or (C₃-C₈)-cycloalkyl.

9. Metal complex according to any one of the preceding claims, **characterized in that** T₁ and T₂ are identical and represent (C₃-C₈)cycloalkyl.

10. Metal complex according to any one of the preceding claims, **characterized in that** M is a metal chosen from Pt, Pd and Ni.

11. Metal complex according to any one of the preceding claims, **characterized in that** M is platinum having the oxidation number 0.

12. Metal complex according to any one of the preceding claims, **characterized in that** R₃ = R₄; R₁ = R₆; R₂ = R₅; and either Y₁ = Y₂, or Y₁ = CR_{b}¹R_{c} and Y₂ = CR_{b}²R_{c} where R_{b}¹ and R_{b}² together form a symmetric chain, or alternatively Y₁ = SiR_{d}¹Rₑ and Y₂ = SiR_{d}²Rₑ where R_{d}¹ and R_{d}² together form a symmetric chain.

13. Metal complex according to any one of the preceding claims, of formula: 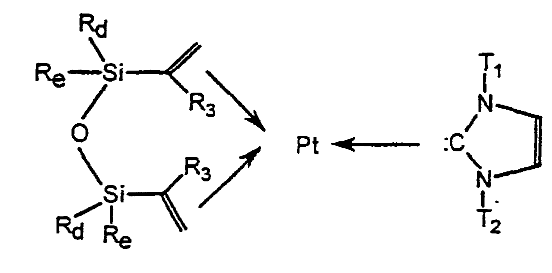 in which:
R₃ represents a hydrogen atom; a (C₁-C₈)alkyl group; or a (C₃-C₈)cycloalkyl group optionally substituted with (C₁-C₄)alkyl;
T₁ and T₂ are identical and represent (C₁-C₈)alkyl or (C₃-C₈)cycloalkyl;
R_{d} and Rₑ are as defined in Claim 1.

14. Method for the hydrosilylation of olefins or of acetylene derivatives, **characterized in that** it is carried out in the presence of a catalyst comprising the metal complex of any one of Claims 1 to 13.

15. Hydrosilylation method according to Claim 14, comprising the reaction of an olefin with a siloxane having an Si-H unit.

16. Catalytic composition comprising, as active substance, one or more metal complexes according to any one of Claims 1 to 13.
